# EUROPÄISCHE PATENTANMELDUNG

(11) **EP 2 374 741 A1**
(43) Veröffentlichungstag der Anmeldung: **12.10.2011**
(21) Anmeldenummer: 11002311.6
(22) Anmeldetag: 21.03.2011
(51) Int. Cl.: B65G 47/90

(54) **Greifersystem für Schalenverschließmaschine**

(30) Priorität: 08.04.2010 DE 102010014212
(71) Anmelder: MULTIVAC Sepp Haggenmüller GmbH & Co KG, 87787 Wolfertschwenden (DE)
(72) Erfinder: Wagner, Christoph, 87721 Ottobeuren (DE)
(74) Vertreter: Grünecker, Kinkeldey, Stockmair & Schwanhäusser Anwaltssozietät

(57) **Zusammenfassung**

Die Erfindung bezieht sich auf ein besonders hygienisches Greifersystem (7) in einer Schalenverschließmaschine (1), wobei Schalenaufnahmen (12) zur form- und/oder kraftschlüssigen Aufnahme eines Schalenrandes (11) beschichtet sind.

## Beschreibung

Die Erfindung bezieht sich auf ein Greifersystem gemäß dem Oberbegriff des Anspruchs 1.

Bei Schalenverschließmaschinen werden Schalen, die mit Produkten gefüllt sind, auf Transportbändern einer Arbeitsstation in der Schalenverschließmaschine zugeführt, um die Schalen mit einer Deckelfolie luftdicht zu verschließen. Dabei erfasst ein Greifersystem die herangeführten und in Position zueinander und zum Greifersystem gebrachten Schalen, um diese in die Arbeitsstation zu befördern. Bei dieser Bewegung des Greifersystems in Richtung der Arbeitsstation tritt zwischen dem Schalenboden und dem Transportband eine Friktion auf, die eine Neigung der Schale innerhalb des Greifersystems zu Folge hat. Dies gilt es zu verhindern, da dabei ein Teil der Produktmenge vor allem bei flüssigen Produkten herausschwappen kann. Eine zweite Ursache für eine Neigung der Schalen im Greifersystem ist eine hohe Beschleunigung, die am Anfang und am Ende der Förderbewegung in die Arbeitsstation auftreten kann.

Die heute bekannten Ausführungen sehen unter anderem einen Formschluss des Greifersystems gegenüber den Schalenrändern vor. Dies legt zugrunde, dass Greiferarme die zum Schalenrand einer Schalensorte passende Geometrie aufweisen und damit in Abhängigkeit zur Schale stehen. Bei unterschiedlichen Geometrien von Schalenrändern ist somit eine Vielzahl von verschiedenen Greiferarmen an einer Schalenverschließmaschine notwendig. Diese Ausführungen besitzen üblicherweise Vertiefungen bzw. Rillen, um dem beim Verkippen entstehenden Moment entgegenzuwirken. Sie haben den Nachteil, dass aufgrund der Herstellung die eingebrachten Vertiefungen Engstellen bzw. scharfe Innenkanten aufweisen, die aus hygienischer Sicht, besonders beim Verpacken von Lebensmitteln, wegen der schlechten Reinigbarkeit bedenklich sind.

Bei hygienisch herausgearbeiteten Vertiefungen sind diese allerdings nur auf eine oder wenige bestimmte Höhen der Schalen beschränkt.

Eine hygienische Ausführung fordert eine gute Reinigbarkeit aller Oberflächen des Greifersystems, vor allem der mit der Schale in Kontakt tretenden Flächen bzw. dem Produkt nahe stehenden Flächen.

Aufgabe der vorliegenden Erfindung ist es, ein Greifersystem für eine Schalenverschließmaschine zur Verfügung zu stellen, bei dem die beschriebenen Probleme gelöst werden.

Diese Aufgabe wird gelöst durch ein Greifersystem mit den Merkmalen des Anspruchs 1. Vorteilhafte Weiterbildungen der Erfindung sind in den Unteransprüchen angegeben.

Das erfindungsgemäße Greifersystem umfasst mindestens einen Greiferarm und eine Schalenaufnahme zum form- und/oder kraftschlüssigen Erfassen einer Schale und zum Transportieren dieser Schale, wobei das Trägermaterial der Schalenaufnahme wenigstens an der Seite, die mit der Schale in Kontakt kommt, eine Beschichtung aufweist. Mit dieser Beschichtung ist der Greiferarm bzw. die Schalenaufnahme so ausgeführt, um Schalen mit ähnlicher Geometrie des Schalenrandes kraftschlüssig aufzunehmen entsprechend der Elastizität der Beschichtung. Eine kraftschlüssige Aufnahme der Schale verbessert wesentlich das Kippverhalten der Schalen bei hohen Beschleunigungen oder das durch die Friktion mit dem Transportband wirkende Moment.

Das Trägermaterial der Schalenaufnahme, welches ein Teil des Greiferarms oder vorzugsweise der Greiferarm selbst sein kann, ist vorteilhafterweise in Edelstahl oder Aluminium ausgeführt, um sowohl den Stabilitätsanforderungen, als auch der Lebensmitteltauglichkeit zu genügen.

Die erfindungsgemäße Beschichtung weist eine bevorzugte Härte von 30 bis 80 Shore-A auf, insbesondere einen Härtebereich von 40 bis 60 Shore-A, um bei Kraftschluss zwischen dem Greiferarm und dem Schalenrand ein Eindrücken des Schalenrandes in die Beschichtung zu ermöglichen, um somit eine sichere Positionierung bzw. Fixierung zu erreichen.

Die Beschichtung des Verbundmaterials ist bevorzugt in Silikon ausgeführt, das in verschiedenen Shorehärten verfügbar ist und zugleich auch den Anforderungen der Lebensmittelindustrie genügt und gut zu reinigen ist. Ein weiterer Vorteil ist die Möglichkeit der freien Formgebung der Beschichtung und die gute Verbindung zum Trägermaterial wie Edelstahl oder Aluminium.

Dabei weist die erfindungsgemäße Beschichtung vorzugsweise einen Bereich der Materialstärke von 1 bis 4 mm auf. Dies sorgt für einen geringen Materialverbrauch und geringe Herstellkosten sowie auch für die Möglichkeit der Formgebung und eine zweckmäßige Elastizität für den Kraftschluss mit dem Schalenrand. Ebenso führt diese Ausführung zu einer Gewichtsersparnis des Greifersystems.

Die erfindungsgemäße Beschichtung ermöglicht eine Formgebung, bei der zwei benachbarte Aufnahmerillen einen Abstand von kleiner oder gleich 5 mm aufweisen können. Dies ermöglicht eine hohe Anzahl von Aufnahmerillen für eine Vielzahl von unterschiedlichen Schalenhöhen.

In einer bevorzugten Form der Aufnahmerillen weisen diese keine horizontalen Flächen auf. Dies sorgt für eine gute Reinigbarkeit und macht den Greiferarm für den Einsatz im Lebensmittelbereich geeignet.

Für einen Formschluss der Schalenaufnahme mit dem Schalenrand wenigstens in einem Teilbereich des Schalenrandes kann die Kontur der Schalenaufnahme teilweise der Kontur des Schalenrandes angepasst ausgeführt sein.

Im Folgenden wird ein vorteilhaftes Ausführungsbeispiel der Erfindung anhand einer Zeichnung näher dargestellt. Im Einzelnen zeigen:
- Fig. 1: eine perspektivische Ansicht eines Ausführungsbeispiels einer Schalenverschließmaschine nach dem Stand der Technik,
- Fig. 2: eine perspektivische Ansicht eines Greifersystems in geöffneter Stellung nach dem Stand der Technik,
- Fig. 3: eine perspektivische Ansicht eines Greifersystems in geschlossener Stellung nach dem Stand der Technik,
- Fig. 4: eine perspektivische Ansicht eines erfindungsgemäßen Greifersystems in geschlossener Stellung,
- Fig. 5: eine perspektivische zweiseitige Ansicht einer erfindungsgemäßen Schalenaufnahme,
- Fig. 6: eine Schnittansicht einer erfindungsgemäßen Schalenaufnahme.

Gleiche Komponenten sind in den Figuren durchgängig mit gleichen Bezugszeichen versehen.

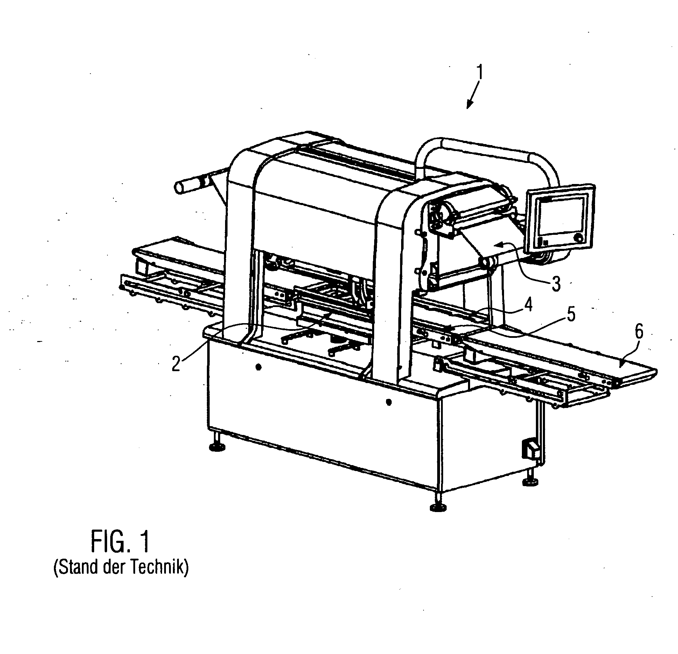

Figur 1 zeigt eine Schalenverschließmaschine 1 mit einer Arbeitsstation 2, die Schalen mit einer Oberfolie 3 versiegelt, einem Greifersystem mit einem ersten Greiferarm 4 und einem zweiten Greiferarm 5, das die nicht in Figur 1 dargestellten Schalen von einem Zuführförderer 6 in die Arbeitsstation 2 bewegt.

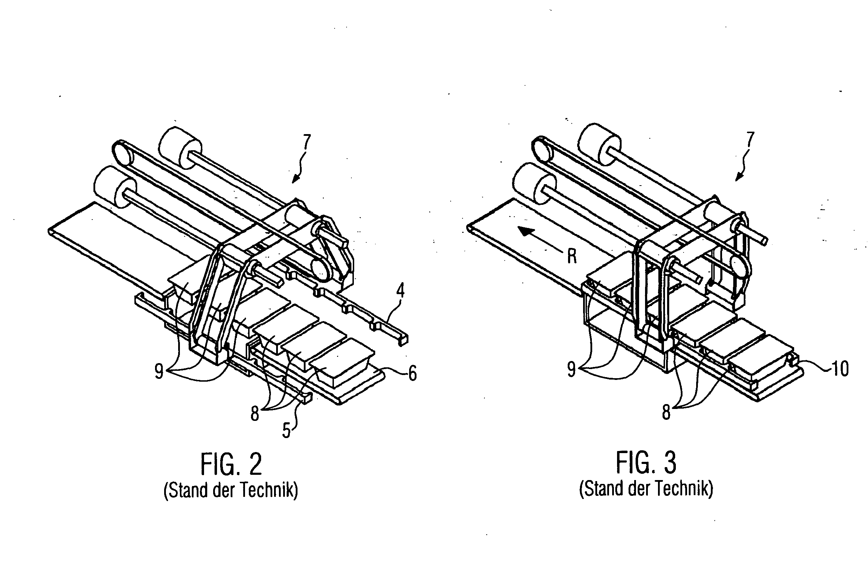

Figur 2 zeigt nach dem Stand der Technik ein Greifersystem 7 mit Schalen 8, die sich auf dem Zuführband 6 befinden, und Schalen 9, die sich in der nicht dargestellten Arbeitsstation 2 befinden. Dabei befinden sich die Greiferarme 4, 5 in einer geöffneten Stellung. In Figur 3 sind die Greiferarme 4, 5 in einer geschlossenen Stellung dargestellt. Dabei werden die Schalen 8, 9 durch die Form der Schalenaufnahmen 10 beidseitig von den Schalenaufnahmen 10 der Greiferarme 4, 5 erfasst und in Transportrichtung R bewegt.

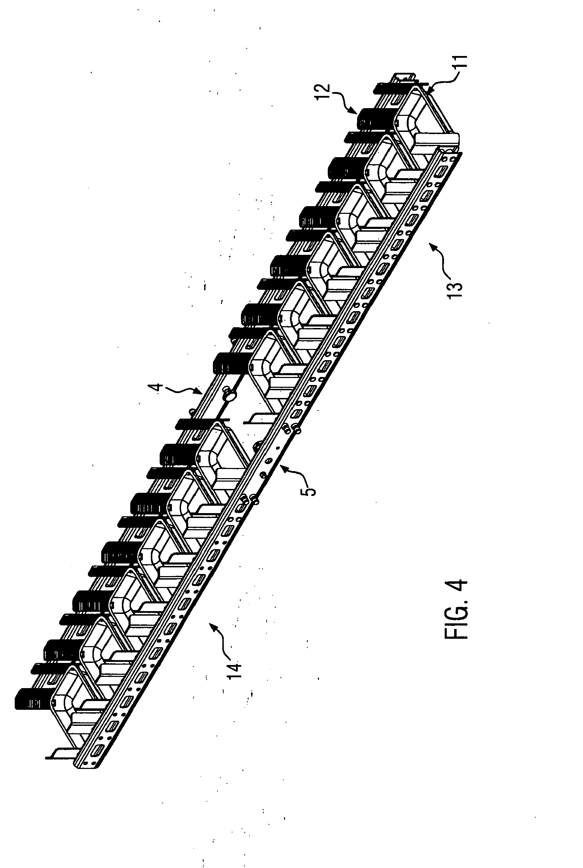

Figur 4 zeigt eine Variante des erfindungsgemäßen Greifersystems 7 mit zwei Greiferarmen 4, 5. Für die Aufnahme des Schalenrandes 11 sind für jede zu transportierende Schale je zwei gewinkelt ausgebildeten Schalenaufnahmen 12 an den Greiferarmen 4 und 5 vorgesehen, um alle vier Bereiche der Ecken des Schalenrandes 11 aufzunehmen.

In Figur 4 sind auch zwei Bereiche 13, 14 der Greiferarme 4, 5 dargestellt: Ein erster Bereich 13 für die Aufnahme der Schalen 8 und ein zweiter Bereich 14 für die Aufnahmen der Schalen 9. In dem gezeigten Ausführungsbeispiel besteht eine Gruppe von Schalen 8, 9 aus sechs Schalen. Die Schalenaufnahmen 12 sind an den Greiferarmen 4, 5 wechselbar angebracht. Die Greiferarme 4, 5 selbst sind ein Teil des Greifersystems 7.

Es sind auch Ausführungen denkbar, bei denen die Schalenaufnahmen 12 und der Greiferarm 4, 5 nicht mehrteilig ausgeführt sind, sondern ein Greiferarm 4, 5 selbst die erfindungsgemäßen beschichteten Schalenaufnahmen 12 beinhaltet und einteilig ausgeführt sein kann.

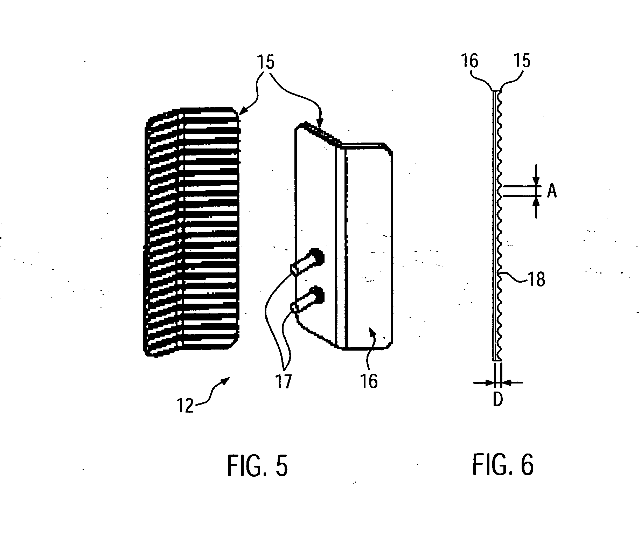

In der Figur 5 ist eine Schalenaufnahme 12 mit der Beschichtung 15 auf einem Träger 16 von zwei Seiten dargestellt. Dabei sind zwei Bolzen 17 an der Rückseite des Trägers 16 angebracht, die für die Montage am Greiferarm 4, 5 vorgesehen sind, und eine Austauschbarkeit der Schalenaufnahmen 12 gewährleisten.

Ein Schnitt durch die Schalenaufnahme 12 mit Träger 16 und Beschichtung 15 ist in Figur 6 zu sehen. Dabei ist die Dicke D der Beschichtung 15 sowie der Abstand A von zwei benachbarten Rillen 18 dargestellt. In vorteilhafter Weise sind die Rillen 18 ohne horizontale Flächen und ohne enge Kerben oder Spalte ausgeführt, um eine gute Reinigbarkeit zu gewährleisten. Die Dicke D der Beschichtung 15 aus Silikon, vorteilhaft mit einer Härte von 50 Shore-A ausgeführt, beträgt 1 mm in der Mitte der Rillen 18 und 3 mm an den Rändern der Rillen 18. Der Abstand A der einzelnen Rillen 18 zueinander beträgt in der dargestellten Variante 5 mm. Dies ermöglicht es, alle Schalen 7, 8 mit den üblichen Höhenabstufungen der Schalen aufzunehmen.

## Patentansprüche

1. Greifersystem (7), umfassend mindestens einen Greiferarm (4, 5) und eine ein Trägermaterial aufweisende Schalenaufnahme (12) zum form- und/oder kraftschlüssigen Erfassen und Transportieren mindestens einer Schale (7, 8), **dadurch gekennzeichnet, dass** das Trägermaterial (16) der Schalenaufnahme (12) auf der mit der Schale (7, 8) in Kontakt kommenden Seite eine Beschichtung (15) aufweist.

2. Greifersystem nach einem der vorigen Ansprüche, **dadurch gekennzeichnet, dass** das Trägermaterial (16) der Schalenaufnahme (12) Edelstahl oder Aluminium ist.

3. Greifersystem nach einem der vorigen Ansprüche, **dadurch gekennzeichnet, dass** die Beschichtung (15) eine Härte von 30 bis 80 Shore-A aufweist.

4. Greifersystem nach einem der vorigen Ansprüche, **dadurch gekennzeichnet, dass** die Beschichtung (15) in Silikon ausgeführt ist.

5. Greifersystem nach einem der vorigen Ansprüche, **dadurch gekennzeichnet, dass** die Beschichtung (15) eine Dicke von 1 bis 4 mm aufweist.

6. Greifersystem nach einem der vorigen Ansprüche, **dadurch gekennzeichnet, dass** die Schalenaufnahme (12) Rillen (18) aufweist.

7. Greifersystem nach Anspruch 6, **dadurch gekennzeichnet, dass** zwei benachbarte Aufnahmerillen (18) einen Abstand 5 mm oder weniger aufweisen.

8. Greifersystem nach einem der vorigen Ansprüche, **dadurch gekennzeichnet, dass** die Form der Aufnahmerillen keine horizontalen Flächen aufweist.

9. Greifersystem nach einem der vorigen Ansprüche, **dadurch gekennzeichnet, dass** die Kontur der Schalenaufnahme (12) wenigstens teilweise der Kontur des Schalenrands (11) angepasst ausgeführt ist.
